# FASCICULE DE BREVET EUROPEEN

(11) **EP 3 840 249 B1**
(45) Date de publication et mention de la délivrance du brevet: **18.10.2023**
(21) Numéro de dépôt: 20215342.5
(22) Date de dépôt: 18.12.2020
(51) Int. Cl.: H04B 7/155, H04W 4/70, H04W 88/04

(54) **PROCEDE ET SYSTEME DE COMMUNICATION PAR SIGNAUX A DIFFERENTES FORMES D'ONDE A TRAVERS UN CANAL LARGE BANDE**
VERFAHREN UND SYSTEM FÜR DIE KOMMUNIKATION ÜBER SIGNALE MIT VERSCHIEDENEN WELLENFORMEN ÜBER EINEN BREITBANDKANAL
METHOD AND SYSTEM FOR COMMUNICATION BY SIGNALS WITH DIFFERENT WAVEFORMS THROUGH A BROADBAND CHANNEL

(30) Priorité: 20.12.2019 FR 1915160
(43) Date de publication de la demande: 23.06.2021
(73) Titulaire: THALES, 92400 Courbevoie (FR)
(72) Inventeur: MARTIN, Béatrice, 92622 GENNEVILLIERS (FR)
(74) Mandataire: Atout PI Laplace

(56) Documents cités:
- US-A1- 2015 172 846

## Description

L'invention concerne de manière générale les systèmes de communication, et en particulier un procédé et un système de communication par signaux à différentes formes d'onde à travers un ou plusieurs canaux à large bande passante.

Le domaine des communications sans fil à couverture étendue, sporadiques et à faibles débits entre des objets connectés appartenant à l'Internet des Objets loT (en anglais « Internet of Things ») a connu un essor important ces dernières années. Chaque objet connecté comporte un module de transmission permettant d'émettre à un très faible niveau de puissance des signaux radiofréquences formatés selon une forme d'onde donnée. La forme d'onde désigne ici l'ensemble de protocoles et de paramètres mis en oeuvre pour transmettre et recevoir un flux de données numériques à travers un support de transmission donné.

Les systèmes existants permettant à un objet connecté d'acheminer son flux de données numériques reposent sur des réseaux de communication filaires et/ou sans fil largement déployés et opérant à très haut débit, selon des standards de communications implémentant une ou plusieurs formes d'onde spécifiques. A titre d'exemple, les réseaux mobiles cellulaires opérant selon le standard LTE (en anglais « Long Term Evolution ») et les réseaux Wi-Fi (en anglais « Wireless Fidelity») permettent aux objets connectés d'acheminer leur flux de données numériques en utilisant la large couverture géographique de tels réseaux de communications. L'intégration d'un objet connecté dans un réseau de données haut débit déjà déployé consiste à lui imposer d'implémenter la même forme d'onde et à le considérer comme toute autre station émettrice du réseau de données en lui allouant les mêmes ressources temporelles et/ou fréquentielles du réseau. Une telle approche présente néanmoins de nombreux inconvénients. En effet, la forme d'onde du réseau de données requiert des ressources matérielles et logiciels dont un objet connecté ne peut généralement disposer. En outre, les ressources d'un réseau de données allouées à un objet connecté dépassent largement ses besoins, un objet connecté pouvant ne pas utiliser de données numériques pendant plusieurs jours.

Les standards de communication régissant les réseaux de données tels que les réseaux cellulaires mobiles ne cessent d'évoluer pour satisfaire un besoin en haut débit qui ne cesse de croître. La migration vers un nouveau standard de communication implémentant une nouvelle forme d'onde nécessite de maintenir l'opérabilité des anciens standards de communications mis en place. Une telle migration peut s'effectuer en adoptant des nouvelles bandes fréquentielles pour les nouvelles formes d'onde. Etant donné que les ressources en fréquence sont de plus en plus rares, la mise en place à l'échelle mondiale d'une telle approche n'est pas toujours possible.

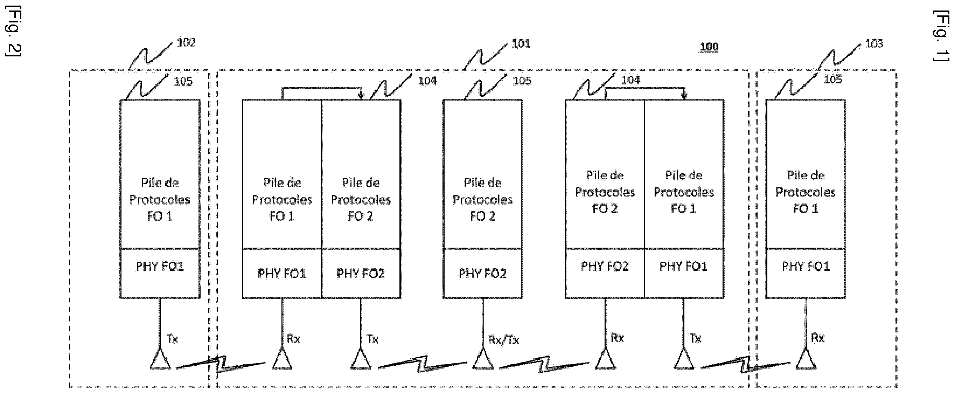

Il est connu d'utiliser un réseau de données implémentant une première forme d'onde comme réseau de transit pour interconnecter deux réseaux de données élémentaires implémentant une même deuxième forme d'onde. Une telle configuration peut se produire dans le cas où la deuxième forme d'onde n'est pas adaptée pour se propager dans l'environnement couvert par le réseau de transit. La figure 1 illustre l'acheminement d'un flux de données initial d'un premier réseau élémentaire 102 à un deuxième réseau élémentaire 103 à travers un réseau de transit 101 implémentant une forme d'onde différente de celle des réseaux de données élémentaires 102, 103. Le réseau de transit 101 met en place deux postes d'interconnexion 104 implémentant chacune la pile de protocole de chacune des deux formes d'onde et plusieurs postes de relais 105 n'implémentant que la forme d'onde associée au réseau de transit 101. Le flux de donnée initial formaté et transporté par la première forme d'onde selon une première fréquence porteuse est reçu, en un premier temps, par l'une des postes d'interconnexion 104 pour extraire les paquets de données utiles en remontant la pile de protocoles de la première forme d'onde. Dans un deuxième temps, le poste d'interconnexion 104 formate les paquets de données utiles extraits selon la deuxième forme d'onde pour émettre le flux de données résultant selon une deuxième fréquence porteuse à l'un des postes de relais 105. Le flux de données résultant parvient à l'autre poste d'interconnexion 104 qui extrait les paquets de données utiles en remontant la pile de protocole de la deuxième forme d'onde avant de les formater selon la première forme d'onde et d'émettre le flux de données dans le deuxième réseau élémentaire 103. Le relayage d'un flux de données numérique à travers un réseau de transit tel que décrit ci-dessus présente néanmoins de nombreux inconvénients :
- Il nécessite d'implémenter les deux piles de protocoles, ce qui accroît la consommation en ressources matérielles et en énergie dans le poste d'interconnexion,
- Il entraîne une dégradation de la qualité de service offerte par les réseaux de données élémentaires en termes de latence (temps nécessité par les flux de données pour traverser la pile de couches de chacune des deux formes d'onde et temps requis pour allouer une ressource pour le relayage), et
- Il requiert une augmentation de la capacité du réseau de transit pour pouvoir relayer le flux de données numériques.

Il est aussi connu d'utiliser un réseau de transit qui implémente, en plus de sa propre forme d'onde, la forme d'onde des réseaux de données élémentaires dont il assure l'interconnexion. Dans ce cas, les ressources matérielles et logicielles de chacune des stations formant le réseau de transit sont dupliquées pour implémenter les piles de protocoles des deux formes d'onde, et le flux de données à relayer entre les deux réseaux de données élémentaires peut garder sa forme d'onde initiale. La figure 2 illustre un tel scénario en présentant plusieurs postes 104 identiques à ressources dupliquées formant le réseau de transit. Chacune des stations 104 du réseau de transit 101 doit, dans ce cas, gérer simultanément les flux issus des deux formes d'onde. Cependant, une telle approche présente une complexité de mise en place nécessitant de dupliquer les ressources au niveau de chaque station 104.

Il existe donc un besoin pour un procédé et un système de communication capable de mettre en place, à partir d'un réseau de données haut débit déployé, un service de communication bas débit et/ou de pouvoir relayer un flux de données numériques formaté selon une forme d'onde différente.

US 2015/172846 décrit un procédé de communication permettant de connecter des objets connectés de type « Internet des Objets » à un réseau de données qui peut être un réseau cellulaire. Le procédé met en oeuvre un dispositif de relais recevant et acheminant les données générées par un objet connecté à un réseau de données. Le procédé consiste à effectuer une opération de découverte sur une première bande de fréquences étroite, établir un premier lien de communication avec un dispositif relais découvert sur une deuxième bande de fréquences étroite, et transmettre des données sur la deuxième bande de fréquences étroite au dispositif relais découvert à relayer vers un troisième dispositif sur un deuxième lien de communication sur une bande de fréquence large.

### Définition générale de l'invention

L'invention vient améliorer la situation en proposant un procédé de communication mis en oeuvre dans un système de communication comprenant au moins un premier réseau de données, le premier réseau de données comprenant une pluralité de stations de communication, chacune des stations de communication comprenant une première unité de transmission implémentant une une pile de protocoles d'une première forme d'onde selon laquelle des signaux à large bande sont formatés, les signaux à large bande étant transmis d'une station de communication à une autre station de communication à travers un ou plusieurs canaux fréquentiels de largeur de bande supérieure à la bande fréquentielle occupée par chacun des signaux à large bande. Avantageusement, le procédé comprend les étapes consistant à :
- Recevoir par une deuxième unité de transmission d'une station de communication un premier signal à bande étroite formaté selon une deuxième forme d'onde différente de la première forme d'onde ;
- Générer un flux de données numériques à bande étroite à partir du premier signal à bande étroite ;
- Déterminer dans un canal fréquentiel alloué à la transmission d'un signal à large bande une bande fréquentielle à bande étroite pour transmettre le flux de données numériques à bande étroite ;
- Transmettre à travers le canal fréquentiel alloué un signal résultant formé d'un signal à large bande et d'un deuxième signal à bande étroite, le deuxième signal à bande étroite transportant le flux de données numériques à bande étroite.

Dans un mode de réalisation, le premier réseau de données peut interconnecter un premier réseau de données élémentaire et un deuxième réseau de données élémentaire, les deux réseaux de données élémentaires implémentant une pile de protocoles de la deuxième forme d'onde.

Avantageusement, la première forme d'onde et la deuxième forme d'onde peuvent utiliser un signal d'horloge différent, le flux de données numériques à bande étroite généré à partir du premier signal à bande étroite étant formaté selon une couche physique appartenant à la pile de protocoles de la première forme d'onde.

Dans un mode de réalisation, des transmetteurs implémentant la pile de protocoles de la deuxième forme d'onde peuvent être interconnectés par le premier réseau de données, le flux de données numériques généré à partir du premier signal à bande étroite étant issu d'au moins deux couches de la pile de protocoles de la deuxième forme d'onde.

En variante, la pile de protocoles de la première forme d'onde et la pile de protocole de la deuxième forme d'onde sont identiques.

Selon un autre mode de réalisation, la pile de protocoles de la première forme d'onde et la pile de protocoles de la deuxième forme d'onde sont différentes.

Avantageusement, une technique de saut de fréquence peut être appliquée aux canaux fréquentiels à large bande selon une loi de saut de fréquence donnée.

Selon un mode de réalisation, la première forme d'onde peut utiliser une technique de modulation multi-porteuse, le deuxième signal à bande étroite étant transmis à travers une bande de fréquences allouée à une ou plusieurs sous-porteuses non utilisées.

Il est en outre proposé un système de communication comprenant au moins un premier réseau de données, le premier réseau de données comprenant une pluralité de stations de communication, chacune des stations de communication comprenant une première unité de transmission implémentant une pile de protocoles d'une première forme d'onde selon laquelle des signaux à large bande sont formatés, les signaux à large bande étant transmis d'une station de communication à une autre station de communication à travers un ou plusieurs canaux fréquentiels de largeur de bande supérieure à la bande fréquentielle occupée par chacun desdits signaux à large bande. Le système de communication comprend une deuxième unité de transmission d'une station de communication apte à recevoir un premier signal à bande étroite formaté selon une deuxième forme d'onde différente de la première forme d'onde, la deuxième unité de transmission d'une station de communication étant en outre configurée pour générer un flux de données numériques à bande étroite à partir du premier signal à bande étroite. La première unité de transmission d'une station de communication est apte à déterminer dans un canal fréquentiel alloué à la transmission d'un signal à large bande une bande fréquentielle à bande étroite pour transmettre le flux de données numériques à bande étroite. La première unité de transmission d'une station de communication est en outre configurée pour transmettre à travers le canal fréquentiel alloué un signal résultant formé d'un signal à large bande et d'un deuxième signal à bande étroite, le deuxième signal à bande étroite transportant le flux de données numériques à bande étroite.

### Brève description des dessins

D'autres caractéristiques, détails et avantages de l'invention ressortiront à la lecture de la description faite en référence aux dessins annexés donnés à titre d'exemple et qui représentent, respectivement :
[Fig. 1] représente une architecture d'un réseau de transit assurant le relayage de données entre deux réseaux de données élémentaires, selon l'art antérieur ;
[Fig. 2] représente une autre architecture d'un réseau de transit assurant le relayage de données entre deux réseaux de données élémentaires, selon l'art antérieur ;
[Fig. 3] représente un système de communication interconnectant deux réseaux de données élémentaires selon un mode de réalisation de l'invention ;
[Fig. 4] représente un système de communication mettant en place un service de communication « bas débit » selon un autre mode de réalisation de l'invention ;
[Fig. 5] est un organigramme représentant un procédé de communication selon un mode de réalisation de l'invention ;
[Fig. 6] illustre la transmission d'un signal à large bande 602 et d'un signal à bande étroite 603 à travers un même canal fréquentiel ;
[Fig. 7]
   Et

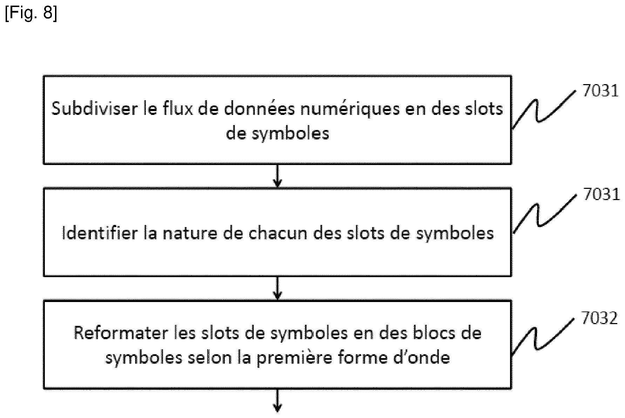

[Fig. 8] sont des organigrammes représentant un procédé de communication selon un autre mode de réalisation de l'invention.

### Description détaillée

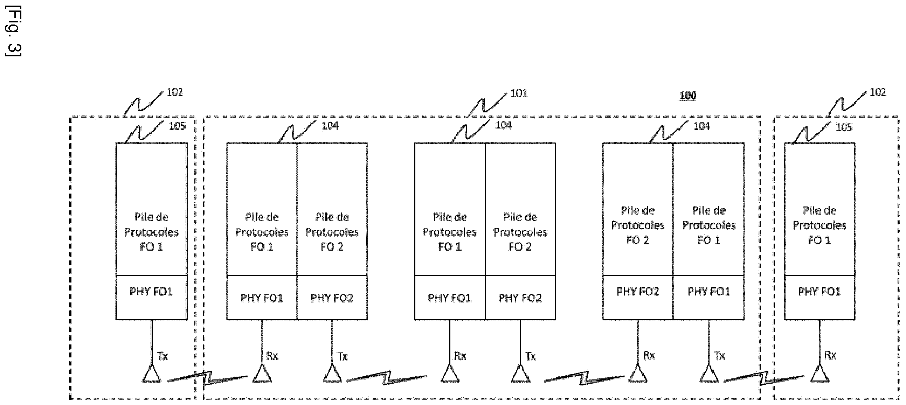

La figure 3 représente un système de communication 300 dans lequel un procédé de communication 500 peut être implémenté selon un mode de réalisation de l'invention. Le système de communication 300 comprend un premier réseau de données 301 implémentant une première forme d'onde selon laquelle des signaux à large bande sont formatés. Le système de communication 300 comprend en outre deux réseaux de données élémentaires 302 implémentant une même deuxième forme d'onde selon laquelle des signaux à bande étroite sont formatés. Les deux réseaux de données élémentaires 302 sont distants géographiquement de sorte que des signaux émis par l'un des réseaux de données élémentaires 302 ne peuvent être décodés par l'autre réseau de données élémentaire 302. Le premier réseau de données 301 peut être dimensionné de sorte à couvrir la zone géographique séparant les deux réseaux de données élémentaires 302 et à pouvoir échanger des signaux avec chacun des deux réseaux de données élémentaires 302. Chacun des réseaux de données formant le système de communication 300 comprend une ou plusieurs stations de communications qui implémentent une ou plusieurs formes d'onde et qui échangent des signaux formatés selon la même forme d'onde à travers un ou plusieurs canaux de communication dont la largeur fréquentielle est choisie supérieure de la bande occupée par chacun des signaux formatés.

Le premier réseau de données 301 peut comprendre deux types de stations : des stations d'interconnexion 303 et des stations de relais 304. Le nombre de stations d'interconnexion 303 peut être limité au nombre de réseaux de données élémentaires 302 à interconnecter afin d'associer à chacun des réseaux de données élémentaires 302 au moins une station d'interconnexion 303. Chacune des stations d'interconnexion 303 peut comprendre une première unité de transmission implémentant la pile de protocoles de la première forme d'onde selon laquelle des signaux à large bande transmis dans le premier réseau de données 301 sont formatés. En outre, les stations d'interconnexion 303 peuvent comprendre une deuxième unité de transmission implémentant la couche physique de la pile de protocoles de la deuxième forme d'onde selon laquelle des signaux à bande étroite transmis dans le deuxième réseau de données 302 sont formatés. La première et la deuxième unité de transmission formant chacune des stations d'interconnexion 303 peuvent être configurées pour échanger des flux de données numériques. A titre d'exemple, le flux binaire généré par la couche physique de la pile de protocoles de la deuxième forme d'onde implémenté par la deuxième unité de transmission peut être reçu par la première unité de transmission. Les stations de relais 304 du premier réseau de données 301 peuvent comprendre la première unité de transmission implémentant la pile de protocoles de la première forme d'onde.

Chacun des réseaux de données élémentaires 302 peut comprendre une ou plusieurs stations de relais 304, au moins une de ces stations de relais 304 étant configurée pour échanger des signaux avec l'une des stations d'interconnexion 303 appartenant au premier réseau de données 301. Chacune des stations de relais 304 appartenant aux réseaux de données élémentaires 302 peut comprendre une troisième unité de transmission implémentant la pile de protocoles de la deuxième forme d'onde selon laquelle des signaux à bande étroite sont formatés.

Selon un mode de réalisation de l'invention, le premier réseau de données 301 et les réseaux de données élémentaires 302 peuvent utiliser un même support de transmission dans lequel les signaux à large bande et les signaux à bande étroite se propagent. Un tel support de transmission peut être de nature filaire (câble coaxial, fibres optiques, etc.) ou sans fil (l'air étant alors utilisé pour faire propager des signaux radiofréquence). Alternativement, le support de transmission utilisé par le premier réseau de données 301 peut être différent du support de transmission utilisée par les réseaux de données élémentaires 302. A titre d'exemple, le premier réseau de données 301 peut utiliser un support de transmission filaire de type fibres optiques et les réseaux de données élémentaires 302 peut utiliser l'air comme support de transmission.

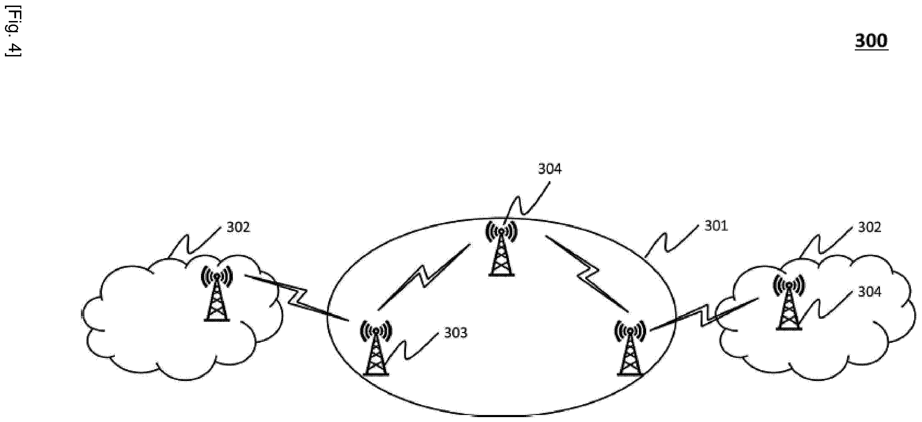

La figure 4 représente un système de communication 300 dans lequel un procédé de communication 500 peut être implémenté selon un autre mode de réalisation de l'invention. Le système de communication 300 est formé d'un premier réseau de données 301 dans lequel deux services de communication sont implémentés. L'un des services de communication est à « haut débit » et utilise pour sa mise en oeuvre des signaux à large bande formatés selon une première forme d'onde. L'autre service de communication est à « bas débit » et utilise pour sa mise en oeuvre des signaux à bande étroite formatés selon une deuxième forme d'onde. Les deux services de communication peuvent être utilisés par un même transmetteur 306 qui est configuré pour implémenter les deux piles de protocoles relatifs à la première et la deuxième forme d'onde. Une telle variante peut s'appliquer aux réseaux mobiles cellulaires qui assurent l'interopérabilité avec le ou les standards « bas débit » déjà déployés lors de la mise en place d'un nouveau standard offrant généralement un plus « haut débit ». Alternativement, chacun des deux services de communication peut être utilisé par une famille distincte de transmetteurs qui peuvent n'implémenter que la pile de protocoles du standard correspondant. Une telle variante peut s'appliquer aux objets connectés appartenant à « l'Internet des Objets » afin de leur permettre de transmettre leurs données à travers un réseau de données « haut débit » tout en implémentant la forme d'onde qui s'adapte à leurs propriétés de transmission et à leurs ressources matérielles et logicielles.

Le premier réseau de données 301 peut comprendre en outre une ou plusieurs stations de communication. Chacune des stations de communication 305 peut comprendre deux unités de transmission : une première unité de transmission implémentant la pile de protocoles de la première forme d'onde selon laquelle des signaux à large bande sont formatés et une deuxième unité de transmission implémentant les couches matérielles de la pile de protocoles de la deuxième forme d'onde selon laquelle des signaux à bande étroite sont formatés. De telles couches matérielles peuvent comprendre, pour un système de communication dont les fonctionnalités sont décrites par un modèle OSI, la couche physique, la couche liaison de données et la couche réseau.

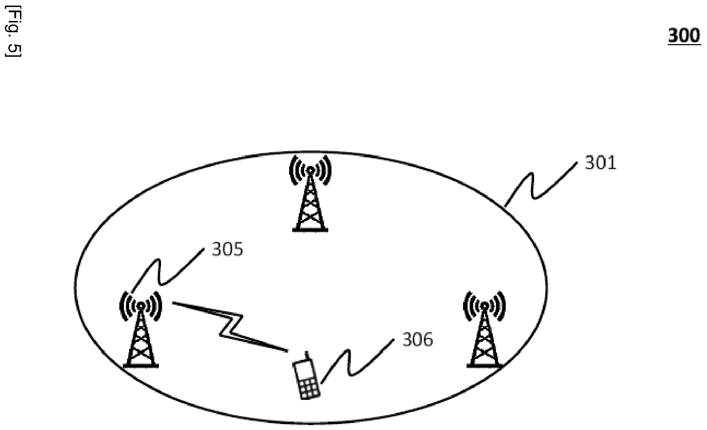

La figure 5 représente un procédé de communication 500 mis en oeuvre par un système de communication 300 selon un mode de réalisation de l'invention. Un tel procédé de communication 500 peut être implémenté dans une station d'interconnexion 303 d'un premier réseau de données 301 assurant le relayage entre deux réseaux de données élémentaires 302 tel que décrit dans la figure 3 ou implémenté dans une quelconque station de communication 305 dans un réseau de données implémentant deux services de communication opérant à différents débits tel que décrit dans la figure 4.

Dans une première étape 501 du procédé, un signal à bande étroite 603 transportant des paquets de données numériques et formaté selon une deuxième forme d'onde est reçu par l'unité de transmission d'une station d'interconnexion 303 ou d'une station de communication 305 implémentant une ou plusieurs des couches de la pile de protocoles de la même deuxième forme d'onde. La réception d'un tel signal à bande étroite 603 peut s'effectuer au moyen des ressources mises à la disposition de la première unité de transmission pour recevoir des signaux à large bande formatés selon une première forme d'onde. A titre d'exemple, dans un système de communication 300 radiofréquence utilisant l'air comme support de transmission, un même étage radiofréquence comprenant des antennes, des filtres radiofréquences, des amplificateurs de signaux radiofréquences et des répartiteurs/combineurs de signaux radiofréquences peut être utilisé pour assurer la réception des signaux à large bande et des signaux à bande étroite. Alternativement, chacune des unités de transmissions incorporées dans une station d'interconnexion 303 ou dans une station de communication 305 peut avoir ses propres ressources matérielles nécessaires à la réception des signaux correspondants.

Dans une deuxième étape 502 du procédé, le signal à bande étroite 603 fourni par l'étape 501 peut être numérisé et traité par les différentes couches de la pile de protocoles de la deuxième forme d'onde implémentées dans la deuxième unité de transmission. Dans un réseau de données assurant le relayage entre deux réseaux de données élémentaires 302 tel que représenté sur la figure 3, où seule la couche physique de la pile de protocoles de la deuxième forme d'onde est implémentée, le flux de données numériques à bande étroite généré à partir du signal à bande étroite 603 peut correspondre au train de bits binaires obtenu en convertissant les échantillons numérisés du signal à bande étroite 603 en bits binaires. Dans un réseau de données implémentant deux services de communication opérant à différents débits, tel que représenté sur la figure 4 où les couches matérielles de la pile de protocoles de la deuxième forme d'onde sont implémentées, le flux de données numériques à bande étroite généré à partir du signal à bande étroite 603 peut correspondre aux paquets de données numériques issus de la couche supérieure de la pile de protocoles implémentée, la couche physique étant la couche inférieure. La couche matérielle supérieure peut correspondre à la couche réseau dans un système de communication 300 dont les fonctionnalités sont décrites par un modèle OSI.

Dans une troisième étape 503 du procédé, un canal fréquentiel 601 large bande déjà alloué pour transmettre un signal à large bande 602 entre la station implémentant les étapes décrites ci-dessus et une autre station apparentant au même réseau de données peut être considéré. Dans un tel canal fréquentiel actif 601, une partie de la bande fréquentielle non occupée par le signal à large bande 602 ou occupée par des composantes fréquentielles non significatives, par exemple d'amplitude inférieure à -30 dBm, peut être déterminée pour permettre la transmission du flux de données numérique à bande étroite. Si le canal fréquentiel 601 comprend plusieurs bandes fréquentielles permettant la transmission du flux de données numériques à bande étroite, la bande fréquentielle retenue pour la transmission peut être choisie en maximisant l'espacement fréquentiel entre le spectre du signal à large bande 602 et le spectre du signal à bande étroite 603. Un tel espacement fréquentiel maximal permet de réduire les contraintes dans les opérations de filtrage requises pour la génération et pour le décodage des signaux.

Dans une quatrième étape 504 du procédé, un flux de données numériques à large bande peut être reçu par la couche physique de la pile de protocoles implémentée dans la première unité de transmission pour être transmis à travers le canal fréquentiel actif 601 large bande alloué. La couche physique peut recevoir en outre le flux de données numériques à bande étroite tel que fourni par la deuxième unité de transmission et la bande de fréquence définie dans le canal alloué à travers laquelle le flux de données numériques à bande étroite sera transmis. La couche physique génère à partir de chacun des flux de données numériques reçus un signal modulé avant de transmettre les deux signaux modulés à travers le canal fréquentiel 601 alloué. Les deux signaux modulés forment un signal résultant.

Dans une cinquième étape 505 du procédé, le signal résultant affecté par les effets du canal de propagation tels que l'atténuation, la dispersion temporelle et la dispersion fréquentielle peut être reçu par une autre station appartenant au même réseau de données. Dans un premier réseau de données 301 assurant le relayage entre deux réseaux de données élémentaires 302, tel que représenté sur la figure 3, la station réceptrice peut être une station de relais 304 ou une deuxième station d'interconnexion 303. Dans un réseau de données implémentant deux services de communication opérant à différent débit tel que représenté sur la figure 4, la station réceptrice peut être une quelconque station de communication 305.

Selon un mode de réalisation de l'invention, la couche physique de la pile de protocoles de la première forme d'onde selon laquelle des signaux à large bande sont formatés peut ajouter au flux de données numérique à large bande une séquence binaire destinée à indiquer à la station réceptrice du signal résultant transmis la présence ou l'absence d'un signal à bande étroite 603 transmis dans le même canal à large bande. La taille d'une telle séquence binaire peut être de l'ordre de quelques octets. L'utilisation d'une telle séquence binaire peut permettre, dans le cas d'un réseau de données implémentant deux services de communication opérant à différents débits, de n'activer la deuxième unité de transmission que dans le cas d'une réception d'un signal à bande étroite 603.

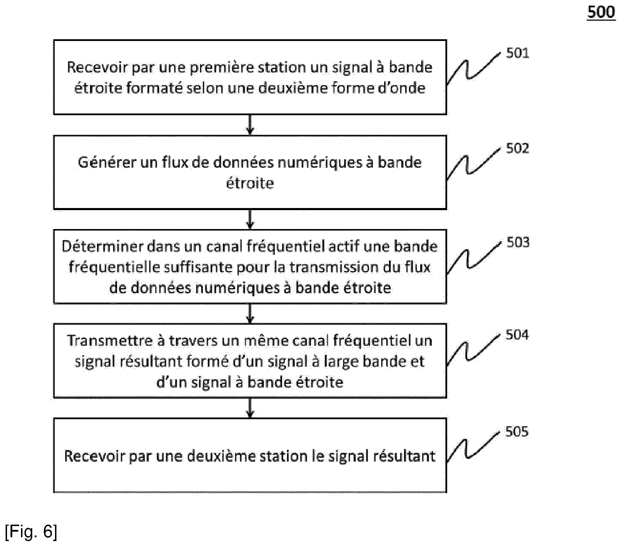

La figure 6 illustre la transmission d'un signal à large bande 602 et d'un signal à bande étroite 603 à travers un même canal fréquentiel 601 initialement dimensionné à la transmission du signal à large bande 602. Le canal fréquentiel 601 peut être caractérisé par un masque d'émission définissant les fréquences qui sont autorisées à se propager, un gabarit de filtre et une bande passante à -3 dB pouvant être associés au masque. Le signal à large bande 602 peut être transporté à une fréquence qui correspond à la fréquence centrale du canal fréquentiel 601 et le spectre du signal à large bande 602 transporté peut être configuré pour être contenu dans la bande passante du masque d'émission. En pratique, le spectre du signal à large bande 602 peut dépendre du format de modulation utilisé pour inscrire le flux de données numérique sur le signal porteur et peut présenter une étendue fréquentielle dépassant le masque d'émission. La bande fréquentielle assignée au signal à bande étroite 603 peut être définie dans la bande passante du masque d'émission de manière à réduire les interférences avec le signal à large bande 602 transporté à travers le même canal.

Selon un autre mode de réalisation de l'invention, la première forme d'onde selon laquelle des signaux à large bande sont formatés peut implémenter une technique de saut de fréquence, appelée aussi technique d'évasion de fréquence, consistant à changer de manière régulière ou non régulière dans le temps le canal fréquentiel 601 à travers lequel le flux de données numérique à large bande est transmis. La loi de saut de fréquence selon laquelle le canal fréquentiel 601 de transmission est changé au cours du temps peut être connue par la station réceptrice. Dans ce cas, la transmission du flux de données numériques à bande étroite formaté selon une deuxième forme d'onde peut également s'effectuer en implémentant une technique de saut de fréquence obéissant à la même loi de saut de fréquence à laquelle la première forme d'onde est soumise.

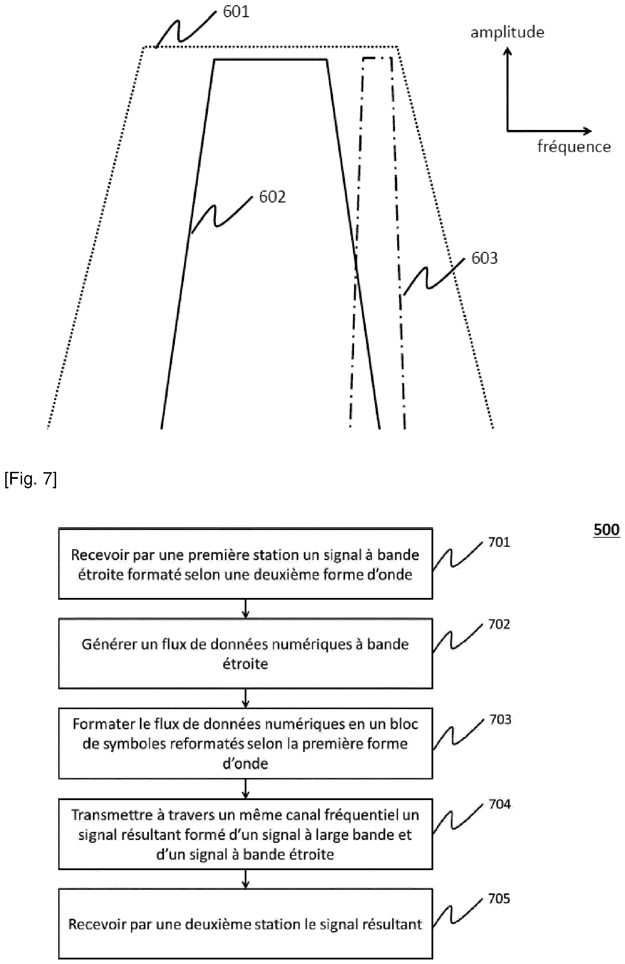

La figure 7 représente un procédé de communication 500 mis en oeuvre dans le système de communication 300 selon un autre mode de réalisation de l'invention. Le système de communication 300 implémente une première forme d'onde selon laquelle des signaux à large bande sont formatés et une deuxième forme d'onde selon laquelle des signaux à bande étroite sont formatés. Le système de communication 300 peut être configuré selon l'architecture représentée sur la figure 3. Dans ce mode de réalisation, les deux formes d'onde mises en oeuvre dans le système de communication 300 ne sont pas basées sur la même référence d'horloge. Ceci implique que l'unité de données d'une couche de la première pile de protocoles est différente en termes de durée de l'unité de données de la couche correspondante de la deuxième pile de protocoles. En particulier, la transmission des bits formant l'unité de données de la couche physique peut être rythmée par un signal d'horloge propre à chaque pile de protocoles. De manière similaire, les trames et les paquets formant respectivement l'unité de données de la couche liaison de données et celle de la couche réseau peuvent être transmis selon un signal d'horloge propre à chaque pile de protocoles. Une trame de bits peut être formée d'un nombre donné de tranches ('slot' en langue anglo-saxonne) qui peuvent avoir la même durée. Les données transportées dans une même tranche ('slot') d'une trame de bits peuvent être des données de trafic utiles aux utilisateurs, des données de synchronisation et/ou des données de signalisation.

Dans la première étape 701 du procédé, un signal à bande étroite 603 est reçu à partir d'un réseau de données élémentaire en utilisant une unité de transmission incorporée dans une station d'interconnexion 303 et implémentant la deuxième forme d'onde selon laquelle le signal à bande étroite 603 reçu est formaté.

Dans l'étape 702 du procédé, le signal à bande étroite 603 peut être traité par la couche physique de la pile de protocoles correspondante. Un tel traitement peut comprendre la numérisation et le décodage du signal à bande étroite 603 reçu pour générer un flux de bits.

L'étape 703 du procédé peut être implémentée par une unité d'adaptation temporelle incorporée dans la deuxième unité de transmission et comprenant les sous-étapes représentées dans l'organigramme de la figure 8.

A l'étape 7031 de la figure 8, le flux de bits généré peut être subdivisé en des tranches ('slots') en utilisant la durée des tranches caractérisant la forme d'onde correspondante. A l'étape 7022, chacune des tranches reconstruites peut être identifiée selon qu'elle transporte des données de trafic utiles aux utilisateurs ou non. Seules les tranches transportant des données de trafic utiles aux utilisateurs peuvent être conservées pour être relayées à travers le premier réseau de données 301 caractérisé par la première forme d'onde. A l'étape 7023, chaque tranche conservée pour le relayage peut être reformatée de manière à avoir la même structure qu'une tranche générée par la première forme d'onde. En particulier, les tranches reformatées peuvent présenter la même durée et leur transmission peut être déclenchée aux mêmes instants que les tranches générées par la première forme d'onde. Les tranches reformatées forment des blocs de symboles reformatés.

En faisant de nouveau référence à la figure 7 ; à l'étape 704 les blocs de symboles reformatés peuvent être transmis à travers un canal large bande initialement alloué à la transmission d'un flux de données numérique formaté selon la première forme d'onde. La transmission peut s'effectuer de manière similaire aux étapes 503 et 504.

A l'étape 705, une station de relais 304 ou une deuxième station d'interconnexion 303 appartenant au même premier réseau de données 301 peut recevoir un signal résultant transportant des blocs de symboles reformatés et un flux de données numériques à large bande. Une station de relais 304 recevant le signal résultant peut reconstruire les blocs de symboles reformatés avant de les transmettre à une autre station de relais 304 ou à la deuxième station d'interconnexion 303 associée au deuxième réseau élémentaire auquel les données transportées par les blocs de symboles reformatés sont destinées. Lorsque la deuxième station d'interconnexion 303 reçoit un signal résultant transportant des blocs de symboles reformatés, la deuxième station d'interconnexion 303 peut formater les blocs de symboles reformatés selon la forme d'onde implémentée dans le deuxième réseau élémentaire en des tranches de données utiles. D'autres tranches nécessaires à l'acheminement des tranches de trafic dans le deuxième réseau élémentaire peuvent être générées selon la deuxième forme d'onde et concaténés aux slots de données de données utiles. De telles tranches ('slots') générées peuvent transporter des données de synchronisation et/ou des sonnées de signalisation.

Selon un autre mode de réalisation de l'invention, le premier réseau de données 301 configuré selon l'une des architectures représentées sur les figures 3 et 4 peut implémenter une technique de modulation multi-porteuses consistant à attribuer de manière statique ou dynamique une ou plusieurs sous-porteuses adjacentes à chaque station mise en oeuvre. Dans un tel mode de réalisation de l'invention, la bande de fréquence assignée à la transmission du signal à bande étroite 603 formaté selon la deuxième forme d'onde peut correspondre à la bande de fréquences des sous-porteuses non utilisée par la station s'apprêtant à relayer ou à transmettre le flux de données à bande étroite. La technique de modulation utilisée implémentée dans le premier réseau de données 301 peut être par exemple la technique OFDM (acronyme pour « Orthogonal Frequency Division Multiplexing ») ou la technique FBMC (acronyme pour « Filter Bank Multi-Carrier »).

Les modes de réalisation de l'invention permettent ainsi, à partir d'un premier réseau de données 301 implémentant une forme d'onde à large bande, d'interconnecter deux réseaux de données élémentaires 302 implémentant une forme d'onde à bande étroite et/ou de mettre en place un service « bas débit » opérant selon une forme d'onde également à bande étroite sans requérir des canaux fréquentiels additionnels et/ou des tranches de temps supplémentaires pour assurer la transmission des signaux à bande étroite. En outre, le premier réseau de données 301 peut assurer le relayage entre les deux réseaux de données élémentaires 302 et/ou la mise en place du service « bas débit » même dans le cas où tous les canaux fréquentiels mis en oeuvre sont utilisés pour la transmission des signaux formatés selon la forme d'onde à large bande.

Les modes de réalisation de l'invention exploitent les bandes fréquentielles non occupées ou occupées par des composantes fréquentielles de faible intensité à l'intérieur d'un canal de transmission pour transmettre un signal à bande étroite 603. Une telle caractéristique améliore l'efficacité spectrale du système de transmission sans perturber les signaux à large bande transmis à l'intérieur du premier réseau de données 301.

La transmission d'un signal à large bande 602 et d'un signal à bande étroite 603 à travers un même canal de transmission et selon un espacement fréquentiel donné permet de réduire les interférences du signal à large bande 602 sur le signal à bande étroite 603 par rapport au cas d'une émission séparée des deux signaux.

Les modes de réalisation de l'invention permettent aussi de réduire l'encombrement d'une station d'interconnexion 303 et d'une station de communication 305, telles que représentées dans les figures 3 et 4 respectivement, en mutualisant les ressources matérielles entre les différentes unités de transmission implémentées. A titre d'exemple, une même chaîne de transmission peut être dimensionnée pour émettre et recevoir les signaux à large bande et à bande étroite manipulés dans un premier réseau de données 301.

L'homme du métier comprendra que le système ou des sous-systèmes selon les modes de réalisation de l'invention peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

## Revendications

1. Procédé de communication (500) mis en oeuvre dans un système de communication (300) comprenant au moins un premier réseau de données (301), ledit premier réseau de données (301) comprenant une pluralité de stations de communication (303, 304, 305), chacune desdites stations de communication (303, 304, 305) comprenant une première unité de transmission implémentant une pile de protocoles d'une première forme d'onde selon laquelle des signaux à large bande (602) sont formatés, lesdits signaux à large bande (602) étant transmis d'une station de communication (303, 304, 305) à une autre station de communication (303, 304, 305) à travers un ou plusieurs canaux fréquentiels (601) de largeur de bande supérieure à la bande fréquentielle occupée par chacun desdits signaux à large bande (602), le procédé comprend les étapes consistant à :
- Recevoir (501) par une deuxième unité de transmission d'une station de communication (303, 305) un premier signal à bande étroite (603) formaté selon une deuxième forme d'onde différente de ladite première forme d'onde ;
- Générer (502) un flux de données numériques à bande étroite à partir dudit premier signal à bande étroite (603);
**caractérisé en ce que** le procédé comprend en outre les étapes consistant à:
- Déterminer (503) dans un canal fréquentiel (601) alloué à la transmission d'un signal à large bande (602) une bande fréquentielle à bande étroite pour transmettre ledit flux de données numériques à bande étroite ;
- Transmettre (504) à travers ledit canal fréquentiel (601) alloué un signal résultant formé d'un signal à large bande (602) et d'un deuxième signal à bande étroite (603), ledit deuxième signal à bande étroite (603) transportant ledit flux de données numériques à bande étroite.

2. Procédé selon la revendication 1, dans lequel le premier réseau de données (301) interconnecte un premier réseau de données élémentaire (302) et un deuxième réseau de données élémentaire (302), les deux réseaux de données élémentaires (302) implémentant une pile de protocoles de ladite deuxième forme d'onde.

3. Procédé selon la revendication 2, dans lequel ladite première forme d'onde et ladite deuxième forme d'onde utilisent un même signal d'horloge, ledit flux de données numériques à bande étroite généré à partir dudit premier signal à bande étroite (603) étant issu d'une couche physique appartenant à la pile de protocoles de ladite deuxième forme d'onde.

4. Procédé selon la revendication 2, dans lequel la première forme d'onde et la deuxième forme d'onde utilisent un signal d'horloge différent, ledit flux de données numériques à bande étroite généré à partir dudit premier signal à bande étroite (603) étant formaté selon une couche physique appartenant à la pile de protocoles de ladite première forme d'onde.

5. Procédé selon la revendication 1, dans lequel des transmetteurs (306) implémentant la pile de protocoles de ladite deuxième forme d'onde sont interconnectés par le premier réseau de données (301), ledit flux de données numériques généré à partir dudit premier signal à bande étroite (603) étant issu d'au moins deux couches de la pile de protocoles de ladite deuxième forme d'onde.

6. Procédé selon l'une des revendications précédentes, dans lequel la pile de protocoles de ladite première forme d'onde et la pile de protocole de ladite deuxième forme d'onde sont identiques.

7. Procédé selon l'une des revendications 1 à 5, dans lequel la pile de protocoles de ladite première forme d'onde et la pile de protocoles de ladite deuxième forme d'onde sont différentes.

8. Procédé selon l'une des revendications précédentes, dans lequel une technique de saut de fréquence est appliquée aux canaux fréquentiels à large bande (601) selon une loi de saut de fréquence donnée.

9. Procédé selon l'une des revendications précédentes, dans lequel ladite première forme d'onde utilise une technique de modulation multi-porteuse, le deuxième signal à bande étroite (603) étant transmis à travers une bande de fréquences allouée à une ou plusieurs sous-porteuses non utilisées.

10. Système de communication (300) comprenant au moins un premier réseau de données (301), ledit premier réseau de données (301) comprenant une pluralité de stations de communication (303, 304, 305), chacune desdites stations de communication (303, 304, 305) comprenant une première unité de transmission implémentant une pile de protocoles d'une première forme d'onde selon laquelle des signaux à large bande (602) sont formatés, lesdits signaux à large bande (602) étant transmis d'une station de communication (303, 304, 305) à une autre station de communication (303, 304, 305) à travers un ou plusieurs canaux fréquentiels (601) de largeur de bande supérieure à la bande fréquentielle occupée par chacun desdits signaux à large bande (602), le système de communication (300) comprend :
une deuxième unité de transmission d'une station de communication (303, 305) apte à recevoir un premier signal à bande étroite (603) formaté selon une deuxième forme d'onde différente de ladite première forme d'onde, ladite deuxième unité de transmission d'une station de communication (303, 305) étant en outre configurée pour générer un flux de données numériques à bande étroite à partir dudit premier signal à bande étroite (603);
**caractérisé en ce que**
la première unité de transmission d'une station de communication (303, 304, 305) étant apte à déterminer dans un canal fréquentiel (601) alloué à la transmission d'un signal à large bande (602) une bande fréquentielle à bande étroite pour transmettre ledit flux de données numériques à bande étroite, ladite première unité de transmission d'une station de communication (303, 304, 305) étant en outre configurée pour transmettre à travers ledit canal fréquentiel (601) alloué un signal résultant formé d'un signal à large bande (602) et d'un deuxième signal à bande étroite (603), ledit deuxième signal à bande étroite transportant ledit flux de données numériques à bande étroite.

## Patentansprüche

1. Kommunikationsverfahren (500), umgesetzt in einem Kommunikationssystem (300), das mindestens ein erstes Datennetz (301) umfasst, wobei das erste Datennetz (301) eine Vielzahl von Kommunikationsstationen (303, 304, 305) umfasst, wobei jede der Kommunikationsstationen (303, 304, 305) eine erste Sendeeinheit umfasst, die einen Protokollstapel einer ersten Wellenform implementiert, gemäß der Breitbandsignale (602) formatiert werden, wobei die Breitbandsignale (602) von einer Kommunikationsstation (303, 304, 305) zu einer anderen Kommunikationsstation (303, 304, 305) über einen oder mehrere Frequenzkanäle (601) übertragen werden, deren Bandbreite größer ist als das von jedem der Breitbandsignale (602) belegte Frequenzband, wobei das Verfahren die folgenden Schritte umfasst:
- Empfangen (501), durch eine zweite Sendeeinheit einer Kommunikationsstation (303, 305), eines ersten Schmalbandsignals (603), das gemäß einer zweiten Wellenform formatiert ist, die sich von der ersten Wellenform unterscheidet;
- Erzeugen (502) eines digitalen Schmalband-Datenstroms aus dem ersten Schmalbandsignal (603);
**dadurch gekennzeichnet, dass** das Verfahren ferner die folgenden Schritte umfasst:
- Bestimmen (503), in einem zum Senden eines Breitbandsignals (602) zugewiesenen Frequenzkanal (601), eines Schmalband-Frequenzbandes zum Senden des digitalen Schmalband-Datenstroms;
- Senden (504), über den zugewiesenen Frequenzkanal (601), eines resultierenden Signals, das aus einem Breitbandsignal (602) und aus einem zweiten Schmalbandsignal (603) gebildet ist, wobei das zweite Schmalbandsignal (603) den digitalen Schmalband-Datenstrom transportiert.

2. Verfahren nach Anspruch 1, wobei das erste Datennetz (301) ein erstes elementares Datennetz (302) und ein zweites elementares Datennetz (302) miteinander verbindet, wobei die beiden elementaren Datennetze (302) einen Protokollstapel der zweiten Wellenform implementieren.

3. Verfahren nach Anspruch 2, wobei die erste Wellenform und die zweite Wellenform ein selbes Taktsignal nutzen, wobei der aus dem ersten Schmalbandsignal (603) erzeugte digitale Schmalband-Datenstrom von einer Bitübertragungsschicht stammt, die zum Protokollstapel der zweiten Wellenform gehört.

4. Verfahren nach Anspruch 2, wobei die erste Wellenform und die zweite Wellenform verschiedene Taktsignale nutzen, wobei der aus dem ersten Schmalbandsignal (603) erzeugte digitale Schmalband-Datenstrom gemäß einer Bitübertragungsschicht formatiert ist, die zum Protokollstapel der ersten Wellenform gehört.

5. Verfahren nach Anspruch 1, wobei Sender (306), die den Protokollstapel der zweiten Wellenform implementieren, durch das erste Datennetz (301) miteinander verbunden sind, wobei der aus dem ersten Schmalbandsignal (603) erzeugte digitale Datenstrom aus mindestens zwei Schichten des Protokollstapels der zweiten Wellenform stammt.

6. Verfahren nach einem der vorhergehenden Ansprüche, wobei der Protokollstapel der ersten Wellenform und der Protokollstapel der zweiten Wellenform identisch sind.

7. Verfahren nach einem der Ansprüche 1 bis 5, wobei der Protokollstapel der ersten Wellenform und der Protokollstapel der zweiten Wellenform unterschiedlich sind.

8. Verfahren nach einem der vorhergehenden Ansprüche, wobei eine Frequenzsprungtechnik auf die Breitband-Frequenzkanäle (601) gemäß einem gegebenen Frequenzsprunggesetz angewendet wird.

9. Verfahren nach einem der vorhergehenden Ansprüche, wobei die erste Wellenform eine Mehrträgermodulationstechnik verwendet, wobei das zweite Schmalbandsignal (603) über ein Frequenzband gesendet wird, das einem oder mehreren nicht verwendeten Unterträgern zugewiesen ist.

10. Kommunikationssystem (300), das mindestens ein erstes Datennetz (301) umfasst, wobei das erste Datennetz (301) eine Vielzahl von Kommunikationsstationen (303, 304, 305) umfasst, wobei jede der Kommunikationsstationen (303, 304, 305) eine erste Sendeeinheit umfasst, die einen Protokollstapel einer ersten Wellenform implementiert, gemäß der Breitbandsignale (602) formatiert werden, wobei die Breitbandsignale (602) von einer Kommunikationsstation (303, 304, 305) zu einer anderen Kommunikationsstation (303, 304, 305) über einen oder mehrere Frequenzkanäle (601) gesendet werden, deren Bandbreite größer ist als das Frequenzband, das von jedem der Breitbandsignale (602) belegt wird, wobei das Kommunikationssystem (300) Folgendes umfasst:
eine zweite Sendeeinheit einer Kommunikationsstation (303, 305), die ein erstes Schmalbandsignal (603) empfangen kann, das gemäß einer zweiten Wellenform formatiert ist, die sich von der ersten Wellenform unterscheidet, wobei die zweite Sendeeinheit einer Kommunikationsstation (303, 305) ferner zum Erzeugen eines digitalen Schmalband-Datenstroms aus dem ersten Schmalbandsignal (603) konfiguriert ist;
**dadurch gekennzeichnet, dass**
die erste Sendeeinheit einer Kommunikationsstation (303, 304, 305) in einem zum Senden eines Breitbandsignals (602) zugewiesenen Frequenzkanal (601) ein Schmalband-Frequenzband zum Senden des digitalen Schmalband-Datenstroms bestimmen kann, wobei die erste Sendeeinheit einer Kommunikationsstation (303, 304, 305) ferner zum Senden, über den zugewiesenen Frequenzkanal (601), eines resultierenden Signals konfiguriert ist, das aus einem Breitbandsignal (602) und einem zweiten Schmalbandsignal (603) gebildet ist, wobei das zweite Schmalbandsignal den digitalen Schmalband-Datenstrom transportiert.

## Claims

1. A communication method (500) realised in a communication system (300) comprising at least a first data network (301), said first data network (301) comprising a plurality of communication stations (303, 304, 305), each of said communication stations (303, 304, 305) comprising a first transmission unit which implements a protocol stack of a first wave form according to which wide band signals (602) are formatted, said wideband signals (602) being transmitted from a communication station (303, 304, 305) to another communication station (303, 304, 305) via one or more frequency channels (601) having a band width greater than the frequency band occupied by each of the wide band signals (602), the method comprising the following steps:
- receiving (501) via a second transmission unit of a communication station (303, 305) a first narrow band signal (603) which is formatted in accordance with a second wave form which is different from the first wave form;
- generating (502) a flow of narrow band digital data from the first narrow band signal (603);
**characterised in that** the method further comprises the following steps:
- determining (503) in a frequency channel (601) allocated to the transmission of a wide band signal (602) a narrow band frequency band to transmit said flow of narrow band digital data;
- transmitting (504), via said allocated frequency channel (601) a resulting signal formed from a wide band signal (602) and from a second narrow band signal (603), said second narrow band signal (603) transporting said flow of narrow band digital data.

2. The method according to claim 1, wherein the first data network (301) interconnects a first elementary data network (302) and a second elementary data network (302), the two elementary data networks (302) implementing a protocol stack of said second wave form.

3. The method according to claim 2, wherein said first wave form and said second wave form use the same clock signal, said flow of narrow band digital data generated from said first narrow band signal (603) originating from a physical layer which belongs to the protocol stack of said second wave form.

4. The method according to claim 2, wherein the first wave form and the second wave form use a different clock signal, said narrow band digital data flow which is generated from said first narrow band signal (603) being formatted in accordance with a physical layer which belongs to the protocol stack of said first wave form.

5. The method according to claim 1, wherein transmitters (306) which implement the protocol stack of said second wave form are interconnected via the first data network (301), said digital data flow generated from said first narrow band signal (603) originating from at least two layers of the protocol stack of said second wave form.

6. The method according to any one of the preceding claims, wherein the protocol stack of said first wave form and the protocol stack of said second wave form are identical.

7. The method according to any one of claims 1 to 5, wherein the protocol stack of said first wave form and the protocol stack of said second wave form are different.

8. The method according to any one of the preceding claims, wherein a frequency hopping technique is applied to the wide band frequency channels (601) in accordance with a given frequency hopping law.

9. The method according to any one of the preceding claims, wherein said first wave form uses a multi-carrier modulation technique, the second narrow band signal (603) being transmitted via a frequency band which is allocated to one or more sub-carriers which are not used.

10. A communication system (300) comprising at least a first data network (301), said first data network (301) comprising a plurality of communication stations (303, 304, 305), each of said communication stations (303, 304, 305) comprising a first transmission unit which implements a protocol stack of a first wave form according to which wide band signals (602) are formatted, said wide band signals (602) being transmitted from one communication station (303, 304, 305) to another communication station (303, 304, 305) via one or more frequency channels (601) having a band width greater than the frequency band occupied by each of said wide band signals (602), the communication system (300) comprises:
a second transmission unit of a communication station (303, 305) which is capable of receiving a first narrow band signal (603) which is formatted in accordance with a second wave form which is different from said first wave form, said second transmission unit of a communication station (303, 305) being further configured to generate a flow of narrow band digital data from said first narrow band signal (603);
**characterised in that**
the first transmission unit of a communication station (303, 304, 305) being capable of determining in a frequency channel (601) allocated to the transmission of a wide band signal (602) a narrow band frequency band to transmit said flow of narrow band digital data, said first transmission unit of a communication station (303, 304, 305) being further configured to transmit via said allocated frequency channel (601) a resulting signal formed from a wide band signal (602) and from a second narrow band signal (603), said second narrow band signal transporting said flow of narrow band digital data.
